**Europäisches Patentamt**

**European Patent Office**

**Office européen des brevets**

(19)

(11) **EP 1 217 488 A1**

(12) **EUROPEAN PATENT APPLICATION**

(43) Date of publication:
**26.06.2002 Bulletin 2002/26**

(51) Int Cl.[7]: **G05D 1/08**, G05B 13/04,
B64G 1/24, B03D 1/14

(21) Application number: **01850183.3**

(22) Date of filing: **01.11.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **02.11.2000 NO 20005522**

(71) Applicant: **Kongsberg Defence & Aerospace AS
3616 Kongsberg (NO)**

(72) Inventor: **Bjorset, Lars, Sr.
3612 Kongsberg (NO)**

(74) Representative: **Onn, Thorsten et al
Stockholms Patentbyra Zacco AB
Box 23101
104 35 Stockholm (SE)**

(54) **Apparatus and method for estimating angular rate**

(57)     A method and apparatus for estimating angular rates for movable bodies in space.

A high-pass component qg is produced by means of a reasonable rate gyro (101) connected in cascade with an internal or external high-pass filter (102). A low-frequency component ql is produced by means of an accelerometer (201) and a multiplier (202), which includes the axial velocity $V_M$ of the body, and a transfer function H(s), where the properties of said transfer function H(s) are adapted to the properties of said high-pass filter (102). The cascade-connected rate gyro and high-pass filter are interconnected with the low-frequency rate estimator and fixedly mounted in a movable body, such as a guided weapon, and produce a resultant rate gyro signal qc that is an estimate of the body's angular rate about the relevant axis.

Fig. 1

EP 1 217 488 A1

## Description

The present invention relates to means for measuring angular velocities (or angular rates), more specifically a method and a reasonable apparatus for estimating angular rates of a guided weapon.

A number of guided weapons are dependent on extremely precise and reliable data pertaining to the weapon's angular rates. These data are utilized by the guided weapon's autopilot devices and fixedly mounted seeker means. Depending on the utilization, the angular rate information must usually have a substantial band width where the frequency goes from a lower limit (zero) to an upper limit $f_H$. The price of the rate gyro is usually considerable and often constitutes a substantial component of the total price of the weapon. Therefore, one has sought to find more reasonable devices for the measuring of angular rates. Reasonably priced rate gyros, such as those typically used in the automobile industry, are often subjected to low-frequency noise, also called bias or zero point shift (drift). Some reasonable rate gyros of this type are combined with an internal high-pass filter to reduce this noise. These types of reasonably priced gyros, however, are not considered adequate for use in guided weapons. Therefore, there is seen to be a substantially felt need for an apparatus and an associated method for calculating angular rates for use in guided weapons, where such an apparatus is simple and reliable, in addition to being reasonable in relation to existing solutions.

Thus, according to the invention there is provided a method and an apparatus of the type described above and disclosed in the preamble of the accompanying claims. Hence, the method is characterized in that a high-pass component qg is produced by means of a reasonable rate gyro connected in cascade with an internal or external high-pass filter to reduce the rate gyro's low-frequency component or noise, such as bias or zero point shift (drift). Further, the method is characterized in that a low-frequency component ql is produced by means of a low-frequency rate estimator that comprises an accelerometer and a multiplier (where the multiplier includes the axial velocity $V_M$ of the body) and a transfer function H(s). The properties of the transfer function H(s) are adapted to the properties of said high-pass filter. The cascade-connected rate gyro and the high-pass filter are interconnected with the low-frequency rate estimator and fixedly mounted in a movable body, such as a guided weapon, and produce a resultant rate gyro signal qc which is an estimate of the body's angular rate about the relevant axis.

The apparatus is thus characterized by:

- a reasonable rate gyro connected in cascade with an internal or external high-pass filter to reduce the rate gyro's low-frequency component or noise, such as bias or zero point shift (drift), to produce thereby a high-pass component qg, and

- a low-frequency rate estimator that comprises an accelerometer and a multiplier that includes the body's axial velocity $V_M$, and that together with a transfer function H(s) produces a low-frequency component ql,

where said cascade-connected rate gyro and high-pass filter are interconnected with said low-frequency rate estimator and fixedly mounted in said movable body to produce a resultant rate gyro signal qc that is an estimate of the body's angular rate about the relevant axis.

Preferred features of the apparatus are apparent from the accompanying patent claims 2 - 5 and 7 - 13.

A body that moves in space can be defined in a right-hand, right-angled coordinate system with the origin in the body's center of gravity. The body's longitudinal axis is coincident with the X-axis of the coordinate system, the body's transversal axis with the Y-axis of the coordinate system, and the body's vertical axis with the system's Z-axis. The positive direction of the Z-axis is defined as a positive rotation of 90° of the Y-axis, about the X-axis. Positive rotation about the transversal axis (the Y-axis) is defined as a positive pitch movement. Positive rotation about the vertical axis (the Z-axis) is a positive yaw movement.

The velocity of the body along the longitudinal axis can be expressed by means of the velocity vector **V**. If the body simultaneously executes an angular movement about the transversal and/or vertical axis (pitch and/or yaw), this velocity vector **V** will rotate about the respective axis at an angular rate vector ω. The lateral acceleration of the body can thus be expressed by means of the acceleration vector **A**, which is the product of the velocity vector **V** and the angular rate vector ω, which is to say:

$$A = \omega \times V \qquad (1)$$

An important control parameter for an autopilot and/or seeker in, for example, a guided weapon is the weapon's angular rate q. This angular rate can be expressed in the frequency area as a function of the corresponding velocity's vector rate component ω as follows:

$$q = \omega(1+sT_I) \qquad (2)$$

where $T_I$ is usually referred to as "Incidence Lag," i.e., a time constant that expresses a lag or delay in the calculated angular rate (ref.: P. Garnell: "Guided Weapon Control Systems," Pergamon Press, Oxford 1980).

Embodiment forms of the invention are apparent from the accompanying patent claims, and from the following description, with reference to the enclosed drawing. It shall be understood that the drawing only shows a typical embodiment example, which is thus not to be perceived as a limitation of the invention.

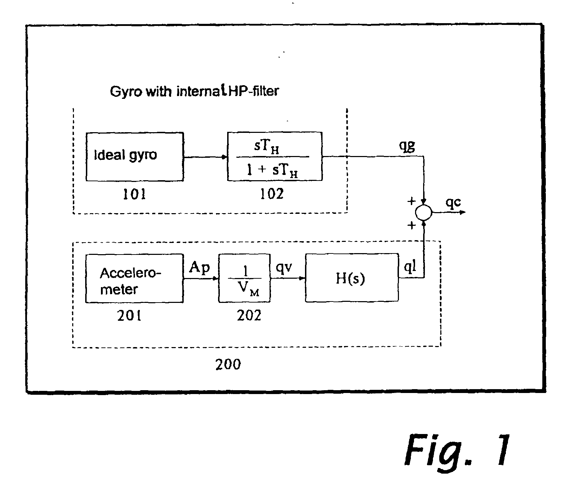

Figure 1 is a block diagram that shows the principle of the apparatus and the method according to the invention.

A reasonable, ideal rate sensor (gyro) 101 connected in cascade with an internal or external high-pass filter 102 having time constant $T_H$ and fixedly mounted in a body in movement in space, such as a guided weapon, produces a high-pass filtered rate signal qg. The rate gyro's low-frequency component or noise is reduced in the high-pass filter.

An accelerometer 201 fixedly mounted in said guided weapon gives the measured lateral acceleration Ap. Equation 1 gives the velocity vector's angular rate qv, by the division of Ap by the body's axial velocity component $V_M$ in the multiplier 202. By means of the transfer function H(s), whose properties are adapted to the properties of high-pass filter 102, the relevant low-frequency component of the angular rate qv, designated ql, is obtained.

The transfer function H(s) may consist of two separate functions: One function is to derive the body's angular rate q from the velocity's vector rate qv in accordance with equation 1. A second function is to low-pass filter the result in order to retain the low-frequency component that is missing in the high-pass filtered rate signal qg.

The gyro's time constant $T_H$ usually has a substantially higher numerical value than the "Incidence Lag" time constant $T_I$. In the case at hand, one can disregard the "Incidence Lag"; in other words, $T_I = 0$, so that equation 2 expresses the body's angular rate as $q = \omega$. Further, this means that the transfer function H(s) is reduced to a simple low-pass filter that is in accordance with the properties in the rate gyro's high-pass filter.

The rate gyro's high-pass component qg, and the developed low-pass component ql, are then added in order to give the angular rate qc, where qc is the desired estimate of the body's angular rate for frequencies between zero and $f_H$.

The algorithm for the apparatus will now be described in principle for an angular rate estimator for pitch, i.e., rotation about the body's transversal axis. There is required, as mentioned above, a right-hand, right-angled coordinate system with the origin in the body's center of gravity, where the longitudinal axis of the body is coincidental with the X-axis of the coordinate system, the body's transversal axis with the Y-axis of the coordinate system, and the body's vertical axis with the system's Z-axis. The positive direction of the Z-axis is defined as a positive rotation of the Y-axis about the X-axis of 90°. Positive rotation about the transversal axis (the Y-axis) is defined as a positive pitch-movement.

The linear (scalar) velocity $V_M$ of a body in space, such as a missile, is assumed to be known, measured or determined as a function of flight time $t_F$ based on a reference table mounted therein, as:

$$V_M = V_M(t_F) \qquad (3)$$

The velocity's vector rate qv about the Y-axis is then calculated by means of equation I as:

$$qv = Ap/V_M \qquad (4)$$

where Ap is the lateral acceleration of the body as measured by means of an accelerometer mounted therein, having sensing axes along the body's positive Z-axis.

The low-frequency angular rate component ql about the Y-axis is then calculated with an appropriate low-pass filtering through the transfer function H(s). The resultant "corrected" rate gyro signal qc is thus:

$$qc = qg + ql \qquad (5)$$

where qg is the pitch rate as furnished from the rate gyro.

The principle according to the invention can also be used in an algorithm such as that above, for estimation of the yaw rate. Positive rotation about the vertical axis (the Z-axis) is then a positive yaw movement.

Although the example above describes an apparatus for calculation of pitch rate, it shall be understood that the apparatus according to the invention also comprises calculation of the angular rate in yaw, which is to say a movement about the body's Z-axis.

Although the above description refers to a missile in the discussion of the invention, it shall be understood that the invention is applicable for any guided weapon, and to any body that moves in space.

**Claims**

1. A method for estimating angular rates qc for movable bodies in space, **characterized in that**:

   - a high-pass component qg is produced by means of a reasonable rate gyro (101) that is connected in cascade with an internal or external high-pass filter (102) to reduce the rate gyro's low-frequency component or noise, such as bias or zero point shift (drift), and
   - a low-frequency component ql is produced by means of a low-frequency rate estimator (200) which comprises an accelerometer (201) and a multiplier (202), which includes the axial velocity $V_M$ of the body, and a transfer function H(s), where the properties of said transfer function H(s) are adapted to the properties of said high-pass filter (102), and where

said cascade-connected rate gyro and high-pass filter, interconnected with said low-frequency rate estimator and fixedly mounted in said movable body, produces a resultant rate gyro signal qc that is an estimate of the body's angular rate about the relevant axis.

2. The method according to claim 1, **characterized in that** a rate signal qv is produced by means of a multiplier (202) which multiplies the signal Ap from the accelerometer (201) with the inverse of the axial velocity, $V_M$, of the body, where the rate signal qv forms the input value in said transfer function.

3. The method according to claim 1, **characterized in that** the properties of said transfer function H(s) are adapted to the properties of said high-pass filter (102) and the properties of said movable body's "Incidence Lag."

4. The method according to claim 1, **characterized in that** the resultant rate gyro signal qc is an expression for the body's pitch rate.

5. The method according to claim 1, **characterized in that** resultant rate gyro signal qc is an expression for the body's yaw rate.

6. An apparatus for estimating angular rates qc for movable bodies in space, **characterized by**

   - a reasonable rate gyro (101) that is connected in cascade with an internal or external high-pass filter (102) to reduce the rate gyro's low-frequency component or noise, such as bias or zero point shift (drift), to produce thereby a high-pass component qg, and
   - a low-frequency rate estimator (200), which comprises an accelerometer (201) and a multiplier (202) that comprises the body's axial velocity $V_M$, and that together with a transfer function H(s) produces a low-frequency component ql,

   where said cascade-connected rate gyro and high-pass filter are interconnected with said low-frequency rate estimator and fixedly mounted in said movable body to produce a resultant rate gyro signal qc that is an estimate of the body's angular rate about the relevant axis.

7. An apparatus according to claim 6, **characterized in that** the multiplier (202) multiplies the signal Ap from the accelerometer (201) by the inverse of the body's axial velocity, $V_M$, to produce thereby a rate signal qv that forms the input value in said transfer function.

8. An apparatus according to claim 6, **characterized in that** the properties of said transfer function H(s) are adapted to the properties of said high-pass filter (102).

9. An apparatus according to claim 6, **characterized in that** the properties of said transfer function H(s) are adapted to the properties of said high-pass filter (102) and to the properties of said movable body's "Incidence Lag."

10. An apparatus according to claim 6, **characterized in that** the resultant rate gyro signal qc is an expression for the body's pitch rate.

11. An apparatus according to claim 6, **characterized in that** the resultant rate gyro signal qc is an expression for the body's yaw rate.

12. The use of an apparatus as disclosed in claims 6 to 11, for estimating angular rates for a guided weapon.

13. The use of an apparatus as disclosed in claims 6 to 11, for estimating angular rates for movable bodies in space.

Gyro with internal HP-filter

Ideal gyro

101

$$\frac{sT_H}{1 + sT_H}$$

102

qg

+
+

qc

Accelero-
meter

201

Ap

$$\frac{1}{V_M}$$

202

qv

H(s)

ql

200

*Fig. 1*

European Patent
Office

## EUROPEAN SEARCH REPORT

Application Number

EP 01 85 0183

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | MEHRA R ET AL: "Adaptive Kalman filtering, failure detection and identification for spacecraft attitude estimation" CONTROL APPLICATIONS, 1995., PROCEEDINGS OF THE 4TH IEEE CONFERENCE ON ALBANY, NY, USA 28-29 SEPT. 1995, NEW YORK, NY, USA,IEEE, US, 28 September 1995 (1995-09-28), pages 176-181, XP010207439 ISBN: 0-7803-2550-8 * the whole document * | 1-13 | F41G7/22 G06F15/50 |
| A | US 4 106 094 A (LAND ROBERT PERRY) 8 August 1978 (1978-08-08) * column 1, line 6 – column 2, line 31 * * column 7, line 44 – column 12, line 26; figure 1 * | 1-13 | |

TECHNICAL FIELDS SEARCHED (Int.Cl.7)

F41G
G06F

The present search report has been drawn up for all claims

| Place of search | Date of completion of the search | Examiner |
|---|---|---|
| MUNICH | 11 April 2002 | Pierron, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                  EP 01 85 0183

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2002

| Patent document cited in search report | Publication date | Patent family member(s) | Publication date |
|---|---|---|---|
| US 4106094 A | 08-08-1978 | NONE | |

EPO FORM P0459

For more details about this annex : see Official Journal of the European Patent Office, No. 12/82